(19) Europäisches Patentamt
European Patent Office
Office européen des brevets

(11) **EP 4 061 053 B1**

(12) **EUROPEAN PATENT SPECIFICATION**

(45) Date of publication and mention of the grant of the patent:
**03.01.2024   Bulletin 2024/01**

(21) Application number: **20888269.6**

(22) Date of filing: **12.10.2020**

(51) International Patent Classification (IPC):
*H04B 7/06* *(2006.01)*      *H04B 7/08* *(2006.01)*
*H04W 36/00* *(2009.01)*      *H04B 17/336* *(2015.01)*
*H04W 36/06* *(2009.01)*

(52) Cooperative Patent Classification (CPC):
**H04W 36/0094; H04B 7/0695; H04B 7/088;
H04B 17/336;** H04W 36/06

(86) International application number:
**PCT/CN2020/120454**

(87) International publication number:
**WO 2021/093497 (20.05.2021 Gazette 2021/20)**

(54) **BEAM TRACKING METHOD AND DEVICE, BASE STATION, AND COMPUTER READABLE STORAGE MEDIUM**

VERFAHREN UND VORRICHTUNG ZUR STRAHLVERFOLGUNG, BASISSTATION UND COMPUTERLESBARES SPEICHERMEDIUM

PROCÉDÉ ET DISPOSITIF DE SUIVI DE FAISCEAU, STATION DE BASE ET SUPPORT DE STOCKAGE LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **15.11.2019   CN 201911118516**

(43) Date of publication of application:
**21.09.2022   Bulletin 2022/38**

(73) Proprietor: **ZTE Corporation
Shenzhen, Guangdong 518057 (CN)**

(72) Inventor: **LI, Zhoufan
Shenzhen, Guangdong 518057 (CN)**

(74) Representative: **Zoli, Filippo
Brunacci & Partners S.r.l.
Via Pietro Giardini, 625
41125 Modena (IT)**

(56) References cited:
WO-A1-2017/135643      WO-A1-2018/203977
CN-A- 105 340 132      CN-A- 108 075 817
CN-A- 108 075 817      CN-A- 108 631 826
US-A1- 2017 311 276      US-A1- 2018 062 720

## Description

### TECHNICAL FIELD

The present application relates to the field of communication, and more particularly, to a beam tracking method and device, a base station, and a computer readable storage medium.

### BACKGROUND

In the field of 5G communication, in order to meet the increasing demands of users for network performance, millimeter wave frequency band has attracted more and more attention from the industry. However, high-frequency signals have some disadvantages in free space, such as large path loss, poor anti-fading ability, and great influence by rain attenuation, limiting the coverage performance of high-frequency communication systems. Narrow beam-based beamforming is a mainstream method to improve the coverage performance of a high-frequency system at present. This method improves the coverage performance of the system in a certain direction by concentrating the transmitted energy from a transmitter in the direction.

In order to achieve the best receiving performance in a certain direction, the beam alignment between a transmitter and a receiver may be achieved by beam matching. In the related technology, a transmitted narrow beam with optimal performance may be found by scanning all narrow beams. Because the coverage direction angle of each narrow beam is small, in order to achieve omnidirectional coverage, the transmitter may transmit a large number of narrow beams, which means that the beam matching process will be a relatively long process. However, in the mobile communication process, the rotation, movement or the like of a terminal may lead to a change in an optimal transmitted beam. If the optimal transmitted beam cannot be tracked in real time, the communication quality of the system may be seriously affected.

US2018062720A1 relates to a beam tracking technique that reduces the time needed to perform a beamforming procedure and that reduces beam overhead. The apparatus may determine a mapping between a first beam associated with a first type of channel and a second beam associated with a second type of channel. In an aspect, the first type of channel may be different than the second type of channel. The apparatus may receive the first beam associated with the first type of channel and the second beam associated with the second type of channel. In an aspect, the first beam and the second beam may be received from a second device.

CN108075817A relates to a beamforming direction searching method. The method comprises the following steps: a base station sequentially sends a single beam to terminals through a single antenna port in N1 selected initial beam sending directions; the base station sequentially receives feedbacks from the terminals through the single antenna port in N2 selected initial beam receiving directions, and determines the initially optimum beam sending directions and the initially optimum beam receiving directions; the base station selects N3 sub-directions from the initially optimum beam sending directions, and sends at least two beams through at least two antenna ports, wherein the two beams are related to each other; and the base station selects N4 sub-directions from the initially optimum beam receiving directions, sequentially receives feedbacks from the terminals, and determines the optimum beam sending direction and the optimum beam receiving direction of the base station, wherein the N1, the N2, the N3 and the N4 are positive integers.

### SUMMARY

The invention is set out in the appended set of claims.

### BRIEF DESCRIPTION OF DRAWINGS

Various other advantages and benefits will become clear to those having ordinary skill in the art by reading the following detailed description of preferred embodiments. The drawings are only for the purpose of illustrating the preferred embodiments, and are not to be considered as limitations to the present application. Moreover, throughout the drawings, like reference numbers refer to like components, in which:

Fig. 1 is a flowchart of a beam tracking method in an embodiment of the present application;
Fig. 2 is a flowchart of a beam tracking method in an embodiment of the present application;
Fig. 3 is a flowchart of a beam tracking method in an embodiment of the present application;
Fig. 4 is a flowchart of a beam tracking method in an embodiment of the present application; and
Fig. 5 is a schematic diagram of a spatial coverage angle of a beam in an embodiment of the present application.

## DETAILED DESCRIPTION

Embodiments of the present disclosure will be described in more detail below with reference to the accompanying drawings. Although embodiments of the present disclosure are shown in the drawings, it should be understood that the present disclosure can be implemented in various forms and should not be limited by the embodiments set forth herein. On the contrary, these embodiments are provided for a more thorough understanding of the present disclosure, and to fully convey the scope of the present disclosure to those having ordinary skills in the art.

Embodiments of the present application provide a beam tracking method and device, a base station, and a computer readable storage medium, which are used for solving the problem that an optimal transmitted beam cannot be tracked in real time in the existing technology.

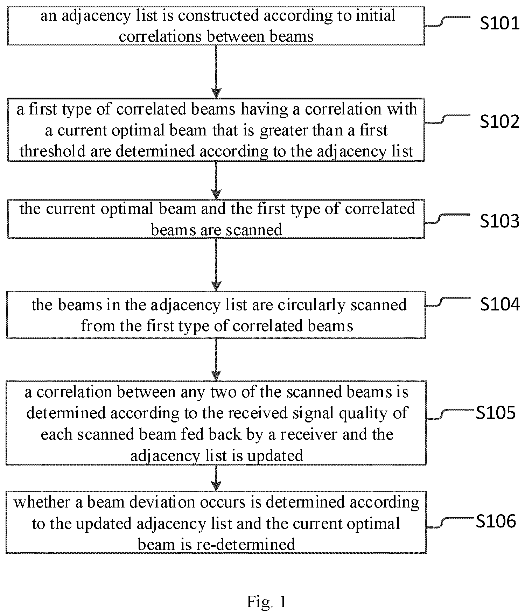

Fig. 1 is a flowchart of a beam tracking method in an embodiment of the present application. As shown in Fig. 1, the embodiment of the present application provides a beam tracking method, including steps of S101 to S106.

At S 101, an adjacency list is constructed according to initial correlations between beams.

For example, taking any beam as a vertex, according to an initial correlation between any two beams, beams related to the vertex beam as a vertex are taken as neighbors of the vertex beam, and the vertex beam is connected with the neighbors by edges, so a correlation between the vertex beam and the neighbors may be reflected by the weights of the edges.

At S102, a first type of correlated beams having a correlation with a current optimal beam that is greater than a first threshold are determined according to the adjacency list.

It should be noted that the value of the first threshold may be manually set and adjusted, for example, the first threshold may be zero.

At S103, the current optimal beam and the first type of correlated beams are scanned.

It should be noted that "scanning" here may be understood as the process of transmitting the beams.

At S104, the beams in the adjacency list are circularly scanned from the first type of correlated beams.

It should be noted that "circularly scanning" here may be understood as scanning the remaining unscanned beams in turn according to the correlations between beams.

At S 105, a correlation between any two of the scanned beams is determined according to the received signal quality of each scanned beam fed back by a receiver and the adjacency list is updated.

It can be understood that the receiver may receive the scanned beams and feed back the received signal quality corresponding to each scanned beam. According to the received signal quality corresponding to any two of the scanned beams, a correlation between the two scanned beams may be determined.

At S106, whether a beam deviation occurs is determined according to the updated adjacency list and the current optimal beam is re-determined.

In this step, by analyzing the updated adjacency list, whether a beam deviation occurs may be determined and an optimal beam after the beam deviation occurs may be re-determined.

In the above method, steps S102-S104 include the process of performing breadth-first scanning on the current optimal beam.

By adopting the embodiments of the present application, the optimal beam may be tracked in real time, so the problem that the optimal transmitted beam cannot be acquired in real time in the field of mobile communication is solved, and by scanning beams according to the correlations between beams, the cycle consumed in the beam tracking process is reduced, so the problem of too long matching cycle in a multi-beam matching scenario is solved.

On the basis of the above-mentioned embodiments, various modified embodiments are further proposed. It should be noted here that in order to make the description brief, only the differences from the above-mentioned embodiments will be described in each modified embodiment.

In some embodiments of the present application, a beam may be a narrow beam, a millimeter beam or a wide beam.

According to some embodiments of the present application, the beam tracking method further includes:

determining a spatial position of each beam according to a spatial coverage angle of each beam before constructing the adjacency list according to initial correlations between beams; and

determining the initial correlations between beams according to the spatial position of each beam.

It should be noted that, in general, a beam is transmitted in a cone shape, and the "spatial coverage angle" mentioned here can be understood as the angle that the beam can cover in the horizontal and vertical directions.

The beams are scanned through Channel State Information Reference Signal (CSI-RS) resources and/or ports configured by the transmitter, each CSI-RS resource and/or port corresponding to at least one beam. The closer the position between the two beams is, the higher the correlation between the two beams is. Each beam can cover a part of the space, and then spatial positions between beams can be analyzed through the spatial coverage angles between beams.

By determining the correlations between beams through the position relationships between beams, the construction process of the adjacency list may be simplified.

In addition, it should also be noted that the initial correlations between beams are not limited to be acquired through the above-mentioned spatial coverage angles, but also other prior knowledge, such as the shape of narrow beams, the multipath influence of communication environment, or the combination of multiple prior knowledge.

According to some embodiments of the present application, the beam tracking method further includes:

scanning all beams before an adjacency list is constructed according to initial correlations between beams; and determining the initial correlations between beams according to the received signal quality of each beam fed back.

By scanning all beams and determining the initial correlations between beams according to the received signal quality of each beam, the omnidirectional coverage of beams may be implemented, thus improving the construction accuracy of the adjacency list.

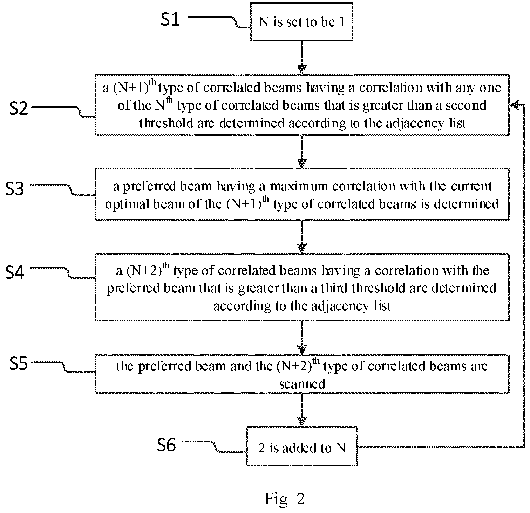

Fig. 2 is a flowchart of a beam tracking method according to the invention of the present application. As shown in Fig. 2, circularly scanning the beams in the adjacency list from the first type of correlated beams includes steps S1 to S6.

At S1, N is set to be 1.

At S2, a $(N+1)^{th}$ type of correlated beams having a correlation with any one of the $N^{th}$ type of correlated beams that is greater than a second threshold are determined according to the adjacency list.

At S3, a preferred beam having a maximum correlation with the current optimal beam of the $(N+1)^{th}$ type of correlated beams is determined.

At S4, a $(N+2)^{th}$ type of correlated beams having a correlation with the preferred beam that is greater than a third threshold are determined according to the adjacency list.

At S5, the preferred beam and the $(N+2)^{th}$ type of correlated beams are scanned.

At S6, 2 is added to N and then jump back to step S2.

It should be noted that no definite magnitude relationship exists between the first threshold, the second threshold and the third threshold, so the settings of these thresholds do not affect each other.

According to some embodiments of the present application, determining a correlation between any two of the scanned beams according to the received signal quality of each scanned beam fed back by a receiver and updating the adjacency list include:

normalizing the received signal quality of each scanned beam fed back by the receiver;
determining a correlation between any two of the scanned beams according to the normalized received signal quality; and
updating the adjacency list according to the correlation between any two of the scanned beams.

Further, updating the adjacency list according to the correlation between any two of the scanned beams includes:

substituting the correlation between any two of the scanned beams into Formula 1 to solve the optimized correlation $A_i$,

$$\min \quad \left\| A_i - A_i(k) \right\|_2^2 + \beta \left\| A_i - A_i(k-1) \right\|_2^2 + \lambda \left\| A_i \right\|_1 \qquad \text{Formula 1;}$$

where $A_i(k)$ denotes a correlation between correlated beams of a beam $i$ and the beam $i$ at time $k$, $A_i(k-1)$ denotes a historical value of $A_i$ at time $k-1$, $\|\cdot\|_2$ denotes L2 norm, $\|\cdot\|_1$, denotes L1 norm, $\beta$ and $\lambda$ are both preset weighted terms and $\beta \geq 0$, $\lambda \geq 0$, $\left\| A_i - A_i(k) \right\|_2^2$ is a posterior mean square error, $\left\| A_i - A_i(k-1) \right\|_2^2$ is a minimum disturbance term, and $\|A_i\|_1$ is a sparsity penalty term; and
updating the adjacency list according to the solved $A_i$.

It should be noted that "min" in Formula 1 can be understood as performing the following formula to be infinitely close to zero, the solution of $\min \left\| A_i - A_i(k) \right\|_2^2 + \beta \left\| A_i - A_i(k-1) \right\|_2^2 + \lambda \left\| A_i \right\|_1$ can be understood as the optimal solution $\tilde{A}_i$ when $\left\| A_i - A_i(k) \right\|_2^2 + \beta \left\| A_i - A_i(k-1) \right\|_2^2 + \lambda \left\| A_i \right\|_1$ is infinitely close to zero, $\tilde{A}_i$ is the optimized correlation $A_i$, where the

$j^{th}$ element $\tilde{a}_{i,j}$ of $\tilde{A}_i$ may be expressed by Formula 2:

$$\tilde{a}_{i,j} = \begin{cases} \dfrac{a_{i,j}(k)}{\beta+1} + \dfrac{\beta a_{i,j}(k-1)}{\beta+1} - \dfrac{\lambda}{2(\beta+1)} & a_{i,j}(k) \geq \dfrac{\lambda}{2} - \beta a_{i,j}(k-1) \\ \dfrac{a_{i,j}(k)}{\beta+1} + \dfrac{\beta a_{i,j}(k-1)}{\beta+1} + \dfrac{\lambda}{2(\beta+1)} & else \end{cases} \qquad \text{Formula 2;}$$

Because the sparsity penalty term $\|A_i\|_1$ has the property of making the optimal solution tend to be sparse, $\tilde{A}_i$ tends to have more zeros, which means that the number of beams actually related to the beam *i* is less than that of the beams related to the beam *i* recorded in the adjacency list. In other words, the number of beams related to the beam *i* in the adjacency list is *M*, 0≤M≤N, *N* is the total number of beams at the transmitter. The number of beams having a correlation with the beam *i* that is greater than zero in the actual detection process is $M_{Ngb,i}$, $M_{Ngb,i}$<M. Therefore, the cycle consumed in the beam scanning process may be reduced, and for any beam, the transmitter may simultaneously maintain the correlation between the beam and a large number of beams, thus ensuring the accuracy of beam tracking, being suitable for environments with relatively strong multipath effects or even environments with drastic multipath changes.

In some embodiments of the present application, the received signal quality includes at least one of reference signal received power, signal-to-noise ratio or signal to interference plus noise ratio.

According to some embodiments of the present application, determining whether a beam deviation occurs according to the updated adjacency list and re-determining the current optimal beam include:
determining a neighbor beam having a maximum correlation with the current optimal beam according to the updated adjacency list; when the correlation between the neighbor beam and the current optimal beam is greater than a fourth threshold, determining that a beam deviation occurs, and taking the neighbor beam as a re-determined current optimal beam.

According to some embodiments of the present application, the method further includes:
determining whether the number of the scanned beams is equal to a preset value, if so, stopping scanning.

It should be noted that, the step includes: during the execution of step S 104, determining once after every scanning until the number of the scanned beams is equal to a preset value, and if the number of the scanned beams is equal to the preset value, stopping scanning. For example, after beams are scanned, the beams may be marked as scanned, and the number of scanned beams may be determined by counting the marked beams.

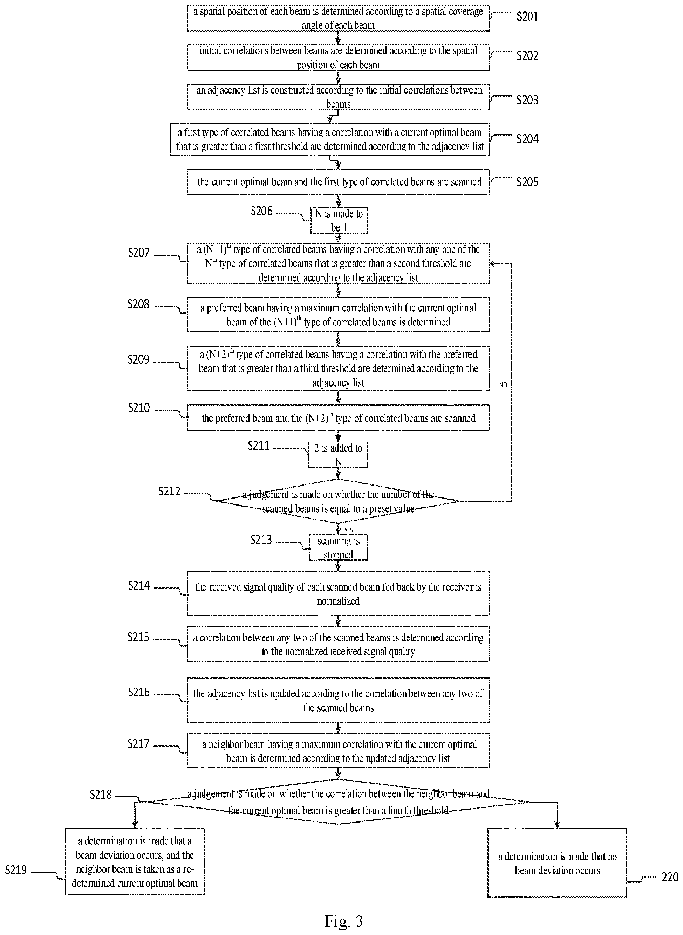

The beam tracking method according to the embodiments of the present application is described in detail with reference to Fig. 3 by means of one specific embodiment. It should be understood that the following detailed description is merely example, but is not a specific limitation to the present application. The scope of protection is defined by the appended set of claims.

Fig. 3 is a flowchart of a beam tracking method in an embodiment of the present application. As shown in Fig. 3, the beam tracking method according to the embodiments of the present application includes steps of S201 to 5220.

At 5201, a spatial position of each beam is determined according to a spatial coverage angle of each beam.

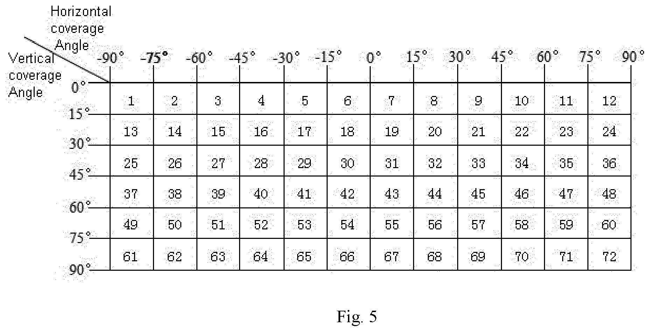

For example, Fig. 5 is a schematic diagram of a spatial coverage angle of a beam in an embodiment of the present application. As shown in Fig. 5, taking the beam numbered 30 as an example, the beams adjacent to the beam numbered 30 in the spatial position are beams numbered 17, 18, 19, 29, 31, 41, 42 and 43, respectively.

At S202, initial correlations between beams are determined according to the spatial position of each beam.

For example, if the beams numbered 17, 18, 19, 29, 31, 41, 42, and 43 are adjacent to the beam numbered 30, the beams numbered 17, 18, 19, 29, 31, 41, 42, and 43 may be selected as neighbors of the beam numbered 30.

At S203, an adjacency list is constructed according to the initial correlations between beams.

For example, each beam serves as a vertex, and each beam selects *M* beams having a strong correlation with the beam as neighbors, where 0< *M* < *N, N* is the total number of beams. The vertex beams as vertexes are connected with the neighbors by edges, and the correlation between the vertex beams and the neighbors may be reflected by the weights of edges.

At 5204, a first type of correlated beams having a correlation with a current optimal beam that is greater than a first threshold are determined according to the adjacency list.

In this step, the first threshold may be set manually, for example, m first type of correlated beams may be selected, where $m = \min(M_{Ngb,n}, M_S)$, $M_{Ngb,n}$ is the number of narrow beams having a correlation with the current optimal beam that is greater than 0, $M_S$ is a preset parameter. $M_S$ may be used to limit the slow scanning process due to the fact that the number of narrow beams having a correlation that is greater than 0 in the adjacency list is too large at the beginning of beam tracking iteration and/or when $M$ is close to $N$. For example, if $M << N$, $M_S = M$ may be selected.

At S205, the current optimal beam and the first type of correlated beams are scanned.

At S206, N is made to be 1.

At S207, a $(N+1)^{th}$ type of correlated beams having a correlation with any one of the $N^{th}$ type of correlated beams that is greater than a second threshold are determined according to the adjacency list.

At 5208, a preferred beam having a maximum correlation with the current optimal beam of the $(N+1)^{th}$ type of correlated beams is determined.

At S209, a $(N+2)^{th}$ type of correlated beams having a correlation with the preferred beam that is greater than a third threshold are determined according to the adjacency list.

At 5210, the preferred beam and the $(N+2)^{th}$ type of correlated beams are scanned.

At 5211, 2 is added to N.

At 5212, a judgement is made on whether the number of the scanned beams is equal to a preset value.

The preset value is used to limit multiple rounds of scanning caused by relative sparsity of the adjacency list after a period of time of beam tracking iteration and/or when $M<<N$. Because a correlation between a beam not directly adjacent to the current optimal beam and the current optimal beam may rapidly attenuate, there may be no need to traverse all beams.

If the number of the scanned beams is equal to the preset value, step S213 is executed; and if the number of the scanned beams is not equal to the preset value, jump back to step S207.

At 5213, scanning is stopped.

At S214, the received signal quality of each scanned beam fed back by the receiver is normalized.

At S215, a correlation between any two of the scanned beams is determined according to the normalized received signal quality.

At 5216, the adjacency list is updated according to the correlation between any two of the scanned beams.

At 5217, a neighbor beam having a maximum correlation with the current optimal beam is determined according to the updated adjacency list.

At 5218, a judgement is made on whether the correlation between the neighbor beam and the current optimal beam is greater than a fourth threshold.

At 5219, if so, a determination is made that a beam deviation occurs, and the neighbor beam is taken as a re-determined current optimal beam.

At 5220, otherwise, a determination is made that no beam deviation occurs.

Among the above steps, steps 5204-5213 include the process of performing breadth-first scanning on the current optimal beam. In this process, the beam scanning cycle may be reduced by defining the first threshold, the second threshold and the third threshold.

In some embodiments, the transmitter can add other preset criteria according to the status of the unscanned beams in the adjacency list and/or the received signal quality fed back by the receiver in the beam scanning process, so as to end the breadth-first scanning process in advance within the preset scanning number of times, specifically including: no unscanned neighbor beam having a correlation greater than the preset threshold exists; the number or proportion of unscanned beams is less than the preset threshold; each received signal quality fed back by the receiver in the latest scanning process is less than the preset threshold.

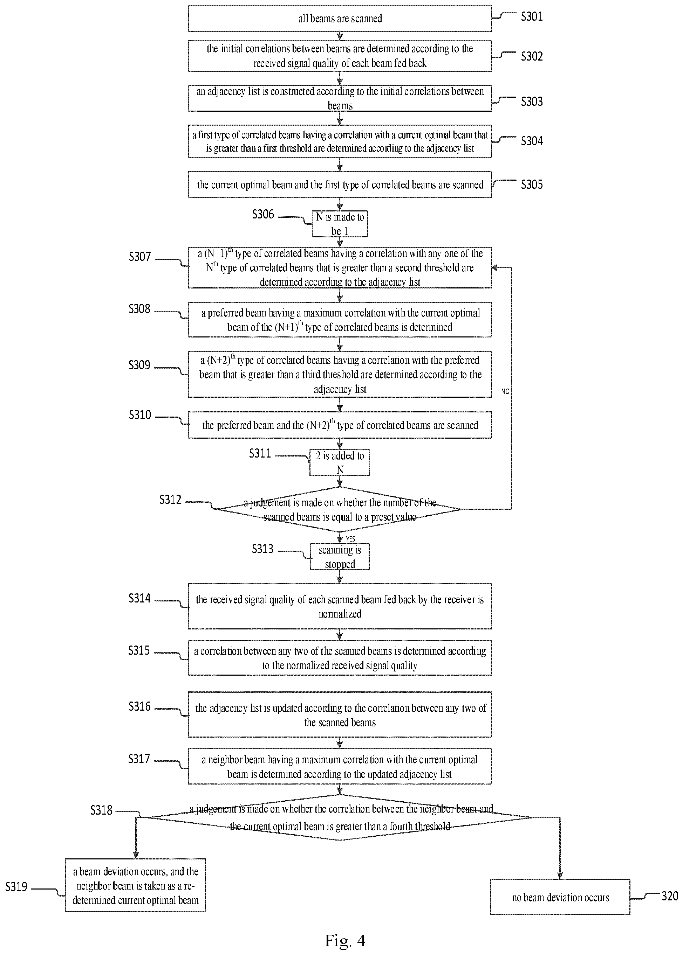

The beam tracking method according to the embodiments of the present application is described in detail with reference to Fig. 4 by means of another specific embodiment. It is worth understanding that the following detailed description is merely example, but is not a specific limitation to the present application. The scope of protection is defined by the appended set of claims.

Fig. 4 is a flowchart of a beam tracking method in an embodiment of the present application. As shown in Fig. 4, the beam tracking method according to the embodiments of the present application includes steps of S301 to S320.

At S301, all beams are scanned;

At S302, the initial correlations between beams are determined according to the received signal quality of each beam fed back;

At S303, an adjacency list is constructed according to the initial correlations between beams;

At S304, a first type of correlated beams having a correlation with a current optimal beam that is greater than a first threshold are determined according to the adjacency list;

At S305, the current optimal beam and the first type of correlated beams are scanned;

At S306, N is made to be 1;

At S307, a $(N+1)^{th}$ type of correlated beams having a correlation with any one of the $N^{th}$ type of correlated beams that is greater than a second threshold are determined according to the adjacency list;

At S308, a preferred beam having a maximum correlation with the current optimal beam of the $(N+1)^{th}$ type of correlated beams is determined;

At S309, a $(N+2)^{th}$ type of correlated beams having a correlation with the preferred beam that is greater than a third threshold are determined according to the adjacency list;

At S310, the preferred beam and the $(N+2)^{th}$ type of correlated beams are scanned;

At S311, 2 is added to N;

At S312, a judgement is made on whether the number of the scanned beams is equal to a preset value; if the number of scanned beams is equal to the preset value, step S313 is executed; and if the number of the scanned beams is not equal to the preset value, jump back to step S307;

At S313, if so, scanning is stopped;

At S314, the received signal quality of each scanned beam fed back by the receiver is normalized;

At S315, a correlation between any two of the scanned beams is determined according to the normalized received signal quality;

At S316, the adjacency list is updated according to the correlation between any two of the scanned beams;

At S317, a neighbor beam having a maximum correlation with the current optimal beam is determined according to the updated adjacency list;

At S318, a judgement is made on whether the correlation between the neighbor beam and the current optimal beam is greater than a fourth threshold;

At S319, if so, a determination is made that a beam deviation occurs, and the neighbor beam is taken as a re-determined current optimal beam; and

At S320, otherwise, a determination is made that no beam deviation occurs.

The embodiments of the present application further provide a beam tracking device, including:

An adjacency list construction unit configured to construct an adjacency list according to initial correlations between beams.

For example, taking any beam as a vertex, according to an initial correlation between any two beams, beams related to the vertex beam as a vertex are taken as neighbors of the vertex beam, and the vertex beam is connected with the neighbors by edges, so a correlation between the vertex beam and the neighbors may be reflected by the weights of the edges.

A scanning unit configured to determine a first type of correlated beams having a correlation with a current optimal beam that is greater than a first threshold according to the adjacency list, configured to scan the current optimal beam and the first type of correlated beams, and configured to circularly scan the beams in the adjacency list from the first type of correlated beams.

It should be noted that the value of the first threshold may be manually set and adjusted, for example, the first threshold may be zero. In addition, "circularly scanning" here may be understood as scanning the remaining unscanned beams in turn according to the correlations between the beams.

An adjacency list updating unit configured to determine a correlation between any two of the scanned beams according to the received signal quality of each scanned beam fed back by a receiver and update the adjacency list.

It can be understood that the receiver may receive the scanned beams and feed back the received signal quality corresponding to each scanned beam. According to the received signal quality corresponding to any two of the scanned beams, a correlation between the two scanned beams may be determined.

An analysis calculation unit configured to determine whether a beam deviation occurs according to the updated adjacency list and re-determine the current optimal beam.

In this step, by analyzing the updated adjacency list, whether a beam deviation occurs may be determined and an optimal beam after the beam deviation occurs may be re-determined.

By adopting the embodiments of the present application, the optimal beam may be tracked in real time, so the problem that the optimal transmitted beam cannot be acquired in real time in the field of mobile communication is solved, and by scanning beams according to the correlations between the beams, the cycle consumed in the beam tracking process is reduced, so the problem of too long matching cycle in a multi-beam matching scenario is solved.

On the basis of the above-mentioned embodiments, various modified embodiments are further proposed. It should be noted here that in order to make the description brief, only the differences from the above-mentioned embodiments will be described in each modified embodiment.

According to some embodiments of the present application, the device further includes:

a detection unit configured to determine a spatial position of each beam according to a spatial coverage angle of each beam before constructing an adjacency list according to initial correlations between beams, and determine the initial correlations between beams according to the spatial position of each beam.

According to some embodiments of the present application, the scanning unit is further configured to scan all beams before constructing an adjacency list according to initial correlations between beams, and determine the initial correlations between beams according to the received signal quality of each beam fed back.

According to some embodiments of the present application, the scanning unit is configured to perform following steps, as shown in Fig. 2:

At S1, N is set to be 1;

At S2, a $(N+1)^{th}$ type of correlated beams having a correlation with any one of the $N^{th}$ type of correlated beams that is greater than a second threshold are determined according to the adjacency list;

At S3, a preferred beam having a maximum correlation with the current optimal beam of the $(N+1)^{th}$ type of correlated beams is determined;

At S4, a $(N+2)^{th}$ type of correlated beams having a correlation with the preferred beam that is greater than a third threshold are determined according to the adjacency list;

At S5, the preferred beam and the $(N+2)^{th}$ type of correlated beams are scanned; and

At S6, 2 is added to N and then jump back to step S2.

According to some embodiments of the present application, the adjacency list updating unit is configured to:

normalize the received signal quality of each scanned beam fed back by the receiver;
determine a correlation between any two of the scanned beams according to the normalized received signal quality; and
update the adjacency list according to the correlation between any two of the scanned beams.

Further, the adjacency list updating unit is configured to:

substitute the correlation between any two of the scanned beams into Formula 1 to solve the optimized correlation $A_i$,

$$\min \quad \left\| A_i - A_i(k) \right\|_2^2 + \beta \left\| A_i - A_i(k-1) \right\|_2^2 + \lambda \left\| A_i \right\|_1 \qquad \text{Formula 1;}$$

where $A_i(k)$ denotes a correlation between correlated beams of a beam $i$ and the beam $i$ at time $k$, $Ai(k-1)$ denotes a historical value of $A_i$ at time $k-1$, $\|\cdot\|_2$ denotes L2 norm, $\|\cdot\|_1$ denotes L1 norm, $\beta$ and $\lambda$ are both preset weighted terms and $\beta \geq 0$, $\lambda \geq 0$, $\left\| A_i - A_i(k) \right\|_2^2$ is a posterior mean square error, $\left\| A_i - A_i(k-1) \right\|_2^2$ is a minimum disturbance term, and $\|A_i\|_1$ is a sparsity penalty term; and
update the adjacency list according to the solved $A_i$.

In some embodiments of the present application, the received signal quality includes at least one of reference signal received power, signal-to-noise ratio or signal to interference plus noise ratio.

According to some embodiments of the present application, the analysis calculation unit is configured to: determine a neighbor beam having a maximum correlation with the current optimal beam according to the updated adjacency list; when the correlation between the neighbor beam and the current optimal beam is greater than a preset threshold, determine that a beam deviation occurs, and take the neighbor beam as a re-determined current optimal beam.

According to some embodiments of the present application, the device further includes:
a judgment unit configured to judge whether the number of the scanned beams is equal to a preset value, if so, stop scanning.

For example, after beams are scanned, the beams may be marked as scanned, and the number of scanned beams may be determined by counting the marked beams.

Embodiments of the present application further provide a base station, including a memory, a processor, and a computer program stored in the memory and running on the processor, where when executing the computer program by the processor, the steps as shown in Fig. 1 are implemented, specifically including:

At S101, an adjacency list is constructed according to initial correlations between beams.

At S102, a first type of correlated beams having a correlation with a current optimal beam that is greater than a first threshold are determined according to the adjacency list.

At S103, the current optimal beam and the first type of correlated beams are scanned.

At S104, the beams in the adjacency list are circularly scanned from the first type of correlated beams.

As shown in Fig. 2, in this step, cyclically scanning may specifically include:

At S1, N is made to be 1;

At S2, a $(N+1)^{th}$ type of correlated beams having a correlation with any one of the $N^{th}$ type of correlated beams that is greater than a second threshold are determined according to the adjacency list;

At S3, a preferred beam having a maximum correlation with the current optimal beam of the $(N+1)^{th}$ type of correlated beams is determined;

At S4, a $(N+2)^{th}$ type of correlated beams having a correlation with the preferred beam that is greater than a third threshold are determined according to the adjacency list;

At S5, the preferred beam and the $(N+2)^{th}$ type of correlated beams are scanned; and

At S6, 2 is added to N and then jump back to step S2.

At S105, a correlation between any two of the scanned beams is determined according to the received signal quality of each scanned beam fed back by a receiver and the adjacency list is updated.

For example, the received signal quality of each scanned beam fed back by the receiver is normalized, where the received signal quality may include at least one of reference signal received power, signal-to-noise ratio or signal to interference plus noise ratio; a correlation between any two of the scanned beams is determined according to the normalized received signal quality; and the adjacency list is updated according to the correlation between any two of the scanned beams. Further, updating the adjacency list according to the correlation between any two of the scanned beams may include:

substituting the correlation between any two of the scanned beams into Formula 1 to solve the optimized correlation $A_i$,

$$\min \quad \left\| A_i - A_i(k) \right\|_2^2 + \beta \left\| A_i - A_i(k-1) \right\|_2^2 + \lambda \left\| A_i \right\|_1 \qquad \text{Formula 1;}$$

where $A_i(k)$ denotes a correlation between correlated beams of a beam $i$ and the beam $i$ at time $k$, $A_i(k-1)$ denotes a historical value of $A_i$ at time $k-1$, $\|\cdot\|_2$ denotes L2 norm, $\|\cdot\|_1$, denotes L1 norm, $\beta$ and $\lambda$ are both preset weighted terms and $\beta \geq 0$, $\lambda \geq 0$, $\left\| A_i - A_i(k) \right\|_2^2$ is a posterior mean square error, $\left\| A_i - A_i(k-1) \right\|_2^2$ is a minimum disturbance term, and $\|A_i\|_1$ is a sparsity penalty term; and

updating the adjacency list according to the solved $A_i$.

It should be noted that "min" in Formula 1 can be understood as performing the following formula to be infinitely close to zero, the solution of $\min \left\| A_i - A_i(k) \right\|_2^2 + \beta \left\| A_i - A_i(k-1) \right\|_2^2 + \lambda \left\| A_i \right\|_1$ can be understood as the optimal solution $\tilde{A}_i$ when $\left\| A_i - A_i(k) \right\|_2^2 + \beta \left\| A_i - A_i(k-1) \right\|_2^2 + \lambda \left\| A_i \right\|_1$ is infinitely close to zero, $\tilde{A}_i$ is the optimized correlation $A_i$.

At S106, whether a beam deviation occurs is determined according to the updated adjacency list and the current optimal beam is re-determined.

For example, a neighbor beam having a maximum correlation with the current optimal beam is determined according to the updated adjacency list; when the correlation between the neighbor beam and the current optimal beam is greater than a fourth preset threshold, a determination is made that a beam deviation occurs, and the neighbor beam is taken as a re-determined current optimal beam.

Further, a spatial position of each beam is determined according to a spatial coverage angle of each beam before constructing the adjacency list according to initial correlations between beams, and the initial correlations between beams are determined according to the spatial position of each beam. Alternatively, all beams are scanned before constructing the adjacency list according to initial correlations between beams, and the initial correlations between beams are determined according to the received signal quality of each beam fed back.

By adopting the embodiments of the present application, the optimal beam may be tracked in real time, so the problem that the optimal transmitted beam cannot be acquired in real time in the field of mobile communication is solved, and by scanning beams according to the correlations between beams, the cycle consumed in the beam tracking process is reduced, so the problem of too long matching cycle in a multi-beam matching scenario is solved.

Embodiments of the present application further provide a computer readable storage medium, where a program for implementing information transmission is stored on the computer readable storage medium, and when executing the program by the processor, the steps as shown in Fig. 1 are implemented, specifically including:

At S101, an adjacency list is constructed according to initial correlations between beams.

At S102, a first type of correlated beams having a correlation with a current optimal beam that is greater than a first threshold are determined according to the adjacency list.

At S103, the current optimal beam and the first type of correlated beams are scanned.

At S104, the beams in the adjacency list are circularly scanned from the first type of correlated beams.

As shown in Fig. 2, in this step, cyclically scanning may specifically include:

At S1, N is made to be 1;

At S2, a $(N+1)^{th}$ type of correlated beams having a correlation with any one of the $N^{th}$ type of correlated beams that is greater than a second threshold are determined according to the adjacency list;

At S3, a preferred beam having a maximum correlation with the current optimal beam of the $(N+1)^{th}$ type of correlated beams is determined;

At S4, a $(N+2)^{th}$ type of correlated beams having a correlation with the preferred beam that is greater than a third threshold are determined according to the adjacency list;

At S5, the preferred beam and the $(N+2)^{th}$ type of correlated beams are scanned; and

At S6, 2 is added to N and then jump back to step S2.

At S105, according to the received signal quality of the scanned beam fed back by a receiver, a correlation between any two of the scanned beams is determined, and the adjacency list is updated.

For example, the received signal quality of the scanned beam fed back by the receiver is normalized, where the received signal quality may include at least one of reference signal received power, signal-to-noise ratio or signal to interference plus noise ratio; a correlation between any two of the scanned beams is determined according to the normalized received signal quality; and the adjacency list is updated according to the correlation between any two of the scanned beams. Further, updating the adjacency list according to the correlation between any two of the scanned beams may include:

substituting the correlation between any two of the scanned beams into Formula 1 to solve the optimized correlation $A_i$,

$$\min \quad \left\| A_i - A_i(k) \right\|_2^2 + \beta \left\| A_i - A_i(k-1) \right\|_2^2 + \lambda \left\| A_i \right\|_1 \qquad \text{Formula 1;}$$

where $A_i(k)$ denotes a correlation between correlated beams of a beam $i$ and the beam $i$ at time $k$, $A_i(k-1)$ denotes a historical value of $A_i$ at time $k$-1, $\|\cdot\|_2$ denotes L2 norm, $\|\cdot\|_1$, denotes L1 norm, $\beta$ and $\lambda$ are both preset weighted terms and $\beta \geq 0, \lambda \geq 0$, $\left\| A_i - A_i(k) \right\|_2^2$ is a posterior mean square error, $\left\| A_i - A_i(k-1) \right\|_2^2$ is a minimum disturbance term, and $\|A_i\|_1$ is a sparsity penalty term; and

updating the adjacency list according to the solved $A_i$.

It should be noted that "min" in Formula 1 can be understood as performing the following formula to be infinitely close to zero, the solution of $\min \left\| A_i - A_i(k) \right\|_2^2 + \beta \left\| A_i - A_i(k-1) \right\|_2^2 + \lambda \left\| A_i \right\|_1$ can be understood as the optimal solution $\tilde{A}_i$ when $\left\| A_i - A_i(k) \right\|_2^2 + \beta \left\| A_i - A_i(k-1) \right\|_2^2 + \lambda \left\| A_i \right\|_1$ is infinitely close to zero, $\tilde{A}_i$ is the optimized correlation $A_i$.

At S106, whether a beam deviation occurs is determined according to the updated adjacency list, and the current optimal beam is re-determined.

For example, a neighbor beam having a maximum correlation with the current optimal beam is determined according to the updated adjacency list; when the correlation between the neighbor beam and the current optimal beam is greater than a fourth preset threshold, a determination is made that a beam deviation occurs, and the neighbor beam is taken as a re-determined current optimal beam.

Further, a spatial position of each beam is determined according to a spatial coverage angle of each beam before constructing the adjacency list according to initial correlations between beams, and the initial correlations between beams are determined according to the spatial position of each beam. Alternatively, all beams are scanned before constructing the adjacency list according to initial correlations between beams, and the initial correlations between beams are determined according to the received signal quality of each beam fed back.

By adopting the embodiments of the present application, the optimal beam may be tracked in real time, so the problem that the optimal transmitted beam cannot be acquired in real time in the field of mobile communication is solved, and by scanning beams according to the correlations between beams, the cycle consumed in the beam tracking process is reduced, so the problem of too long matching cycle in a multi-beam matching scenario is solved.

It should be noted that in the description of this specification, description with reference to the terms "one embodiment", "some embodiments", "exemplary embodiments", "examples", "specific examples" or "some examples" means that the specific features, structures, materials or characteristics described in connection with that embodiment or examples is included in at least one embodiment or example of the present application. In this specification, the schematic expressions of the above terms do not necessarily refer to the same embodiments or examples. Furthermore, the specific features, structures, materials or characteristics described may be combined in any one or more embodiments or examples in a suitable manner.

**Claims**

1. A beam tracking method, comprising:

   constructing (S101) an adjacency list according to initial correlations between beams;
   determining (S102) a first type of correlated beams having a correlation with a current optimal beam that is greater than a first threshold according to the adjacency list;
   scanning (S103) the current optimal beam and the first type of correlated beams;
   circularly scanning (S104) the beams in the adjacency list from the first type of correlated beams;
   determining (S105) a correlation between any two of the scanned beams according to a received signal quality of the scanned beam fed back by a receiver, and updating the adjacency list; and
   determining (S106) whether a beam deviation occurs according to the updated adjacency list, and re-determining the current optimal beam;
   **characterized in that**,
   circularly scanning (S104) the beams in the adjacency list from the first type of correlated beams comprises:

   S1, setting N to be 1;
   S2, determining a $(N+1)^{th}$ type of correlated beams having a correlation with any one of the $N^{th}$ type of correlated beams that is greater than a second threshold according to the adjacency list;
   S3, determining a preferred beam having a maximum correlation with the current optimal beam of the $(N+1)^{th}$ type of correlated beams;
   S4, determining a $(N+2)^{th}$ type of correlated beams having a correlation with the preferred beam that is greater than a third threshold according to the adjacency list;
   S5, scanning the preferred beam and the $(N+2)^{th}$ type of correlated beams; and
   S6, adding 2 to N and then jumping back to step S2.

2. The method of claim 1, further comprising:

   determining a spatial position of each beam according to a spatial coverage angle of each beam before constructing (S101) the adjacency list according to initial correlations between beams; and
   determining the initial correlations between beams according to the spatial position of each beam.

3. The method of claim 1, further comprising:

scanning all beams before constructing (S101) the adjacency list according to initial correlations between beams; and

determining the initial correlations between beams according to the received signal quality of each beam fed back.

4. The method of claim 1, wherein determining (S105) a correlation between any two of the scanned beams according to the received signal quality of the scanned beam fed back by a receiver and updating the adjacency list comprise:

normalizing (S214) the received signal quality of the scanned beam fed back by the receiver;
determining (S215) a correlation between any two of the scanned beams according to the normalized received signal quality; and
updating (S216) the adjacency list according to the correlation between any two of the scanned beams.

5. The method of claim 4, wherein updating (S216) the adjacency list according to the correlation between any two of the scanned beams comprises:

substituting the correlation between any two of the scanned beams into Formula 1 to solve an optimized correlation $A_i$,

$$\min \quad \left\| A_i - A_i(k) \right\|_2^2 + \beta \left\| A_i - A_i(k-1) \right\|_2^2 + \lambda \left\| A_i \right\|_1 \qquad \text{Formula 1;}$$

where $A_i(k)$ denotes a correlation between correlated beams of a beam $i$ and the beam $i$ at time $k$, $A_i(k-1)$ denotes a historical value of $A_i$ at time $k$-1, $\|\cdot\|_2$ denotes L2 norm, $\|\cdot\|_1$ denotes L1 norm, $\beta$ and $\lambda$ are both preset weighted terms and $\beta \geq 0$, $\lambda \geq 0$, $\left\| A_i - A_i(k) \right\|_2^2$ is a posterior mean square error, $\left\| A_i - A_i(k-1) \right\|_2^2$ is a minimum disturbance term, and $\|A_i\|_1$ is a sparsity penalty term; and
updating the adjacency list according to the solved $A_i$.

6. The method of claim 4, wherein received signal quality comprises at least one of reference signal received power, signal-to-noise ratio or signal to interference plus noise ratio.

7. The method of claim 1, wherein determining (S106) whether a beam deviation occurs according to the updated adjacency list and re-determining the current optimal beam comprise:
determining a neighbor beam having a maximum correlation with the current optimal beam according to the updated adjacency list; in response to that the correlation between the neighbor beam and the current optimal beam is greater than a fourth threshold, determining that a beam deviation occurs, and taking the neighbor beam as a re-determined current optimal beam.

8. The method of claim 1, further comprising:
determining (S212) whether the number of the scanned beams is equal to a preset value, in response to being equal to the preset value, stopping scanning.

9. A base station, comprising: a memory, a processor, and computer programs stored in the memory and executable by the processor, wherein the computer programs, when executed by the processor, cause the processor to carry out the beam tracking method of any one of claims 1-8.

10. A computer readable storage medium storing a program for implementing information transmission which, when executed by the processor, causes the processor to carry out the beam tracking method of any one of claims 1-8.

**Patentansprüche**

1. Strahlverfolgungsverfahren, umfassend:

Erstellen (S101) einer Nachbarschaftsliste gemäß anfänglichen Korrelationen zwischen Strahlen;
Bestimmen (S102) eines ersten Typs korrelierter Strahlen, die eine Korrelation mit einem aktuellen optimalen Strahl aufweisen, die größer ist als ein erster Schwellenwert gemäß der Nachbarschaftsliste;
Abtasten (S103) des aktuellen optimalen Strahls und des ersten Typs korrelierter Strahlen; kreisförmiges Abtasten (S104) der Strahlen in der Nachbarschaftsliste des ersten Typs korrelierter Strahlen;

Bestimmen (S105) einer Korrelation zwischen beliebigen zwei der abgetasteten Strahlen gemäß einer empfangenen Signalqualität des abgetasteten Strahls, die von einem Empfänger zurückgegeben wird, und Aktualisieren der Nachbarschaftsliste; und

Bestimmen (S106), ob eine Strahlabweichung gemäß der aktualisierten Nachbarschaftsliste auftritt, und erneutes Bestimmen des aktuellen optimalen Strahls;

**dadurch gekennzeichnet, dass**

ein kreisförmiges Abtasten (S104) der Strahlen in der Nachbarschaftsliste des ersten Typs korrelierter Strahlen Folgendes umfasst;

S1, wobei N auf 1 gesetzt wird;

S2, Bestimmen eines (N+1)-ten Typs korrelierter Strahlen, der eine Korrelation mit irgendeinem des N-ten Typs korrelierter Strahlen aufweist, die größer ist als ein zweiter Schwellenwert gemäß der Nachbarschaftsliste ist;

S3, Bestimmen eines bevorzugten Strahls, der eine maximale Korrelation mit dem aktuellen optimalen Strahl des (N+1)-ten Typs korrelierter Strahlen aufweist;

S4, Bestimmen eines (N+2)-ten Typs korrelierter Strahlen, die eine Korrelation mit dem bevorzugten Strahl aufweisen, die größer ist als ein dritter Schwellenwert gemäß der Nachbarschaftsliste;

S5, Abtasten des bevorzugten Strahls und des (N+2)-ten Typs korrelierter Strahlen; und

S6, Addieren von 2 zu N und dann Zurückspringen zu Schritt S2.

2. Verfahren nach Anspruch 1, ferner umfassend:

Bestimmen einer räumlichen Position von jedem Strahl gemäß einem räumlichen Abdeckungswinkel von jedem Strahl, vor Erstellen (S101) der Nachbarschaftsliste gemäß anfänglichen Korrelationen zwischen Strahlen; und

Bestimmen der anfänglichen Korrelationen zwischen Strahlen gemäß der räumlichen Position von jedem Strahl.

3. Verfahren nach Anspruch 1, ferner umfassend:

Abtasten aller Strahlen vor Erstellen (S101) der Nachbarschaftsliste gemäß anfänglichen Korrelationen zwischen Strahlen; und

Bestimmen der anfänglichen Korrelationen zwischen Strahlen gemäß der empfangenen Signalqualität von jedem zurückgegebenen Strahls.

4. Verfahren nach Anspruch 1, wobei ein Bestimmen (S105) einer Korrelation zwischen beliebigen zwei der abgetasteten Strahlen gemäß einer empfangenen Signalqualität des abgetasteten Strahls, die von einem Empfänger zurückgemeldet wird, und ein Aktualisieren der Nachbarschaftsliste Folgendes umfasst:

normalisieren (S214) der empfangenen Signalqualität des von dem Empfänger zurückgegebenen abgetasteten Strahls;

Bestimmen (S215) einer Korrelation zwischen beliebigen zwei abgetasteten Strahlen gemäß der normalisierten empfangenen Signalqualität; und

Aktualisieren (S216) der Nachbarschaftsliste gemäß der Korrelation zwischen beliebigen zwei abgetasteten Strahlen.

5. Verfahren nach Anspruch 4, wobei ein Aktualisieren (S216) der Nachbarschaftsliste gemäß der Korrelation zwischen beliebigen zwei der abgetasteten Strahlen Folgendes umfasst:

Substituieren der Korrelation zwischen beliebigen zwei abgetasteten Strahlen in Formel 1, um eine optimierte Korrelation $A_i$ zu lösen,

$$\min \; \left\| A_i - A_i(k) \right\|_2^2 + \beta \left\| A_i - A_i(k-1) \right\|_2^2 + \lambda \left\| A_i \right\|_1 \quad \text{Formel 1;}$$

wobei $A_i(k)$ die Korrelation zwischen korrelierten Strahlen eines Strahls $i$ und dem Strahl $i$ zum Zeitpunkt $k$ bezeichnet, $A_i(k$-$1)$ einen historischen Wert von $A_i$ zum Zeitpunkt $k$-$1$ bezeichnet, $\|\cdot\|_2$ die L2-Norm bezeichnet,

$\lVert\cdot\rVert_1$ die L1-Norm bezeichnet, $\beta$ und $\lambda$ beide voreingestellte gewichtete Terme sind, und $\beta \geq 0$, $\lambda \geq 0$, $\lVert A_i - A_i(k) \rVert_2^2$ ein nachfolgender mittlerer quadratischer Fehler ist, $\lVert A_i - A_i(k-1) \rVert_2^2$ ein minimaler Störungsterm ist, und $\lVert A_i \rVert_1$ ein Sparsamkeit-Strafterm ist; und

Aktualisieren der Nachbarschaftsliste gemäß dem gelösten $A_i$.

6. Verfahren nach Anspruch 4, wobei die empfangene Signalqualität mindestens eines von Empfangsleistung des Referenzsignals, Signal-Rausch-Verhältnis oder Signal-Störungs-plus-Rausch-Verhältnis umfasst.

7. Verfahren nach Anspruch 1, wobei ein Bestimmen (S106), ob eine Strahlabweichung gemäß der aktualisierten Nachbarschaftsliste auftritt, und ein erneutes Bestimmen des aktuellen optimalen Strahls Folgendes umfassen:
Bestimmen eines Nachbarstrahls, der eine maximale Korrelation mit dem aktuellen optimalen Strahl gemäß der aktualisierten Nachbarschaftsliste aufweist; als Reaktion darauf, dass die Korrelation zwischen dem Nachbarstrahl und dem aktuellen optimalen Strahl größer ist als ein vierter Schwellenwert, Bestimmen, dass eine Strahlabweichung auftritt, und Betrachten des Nachbarstrahls als einen neu bestimmten aktuellen optimalen Strahl.

8. Verfahren nach Anspruch 1, ferner umfassend:
Bestimmen (S212), ob die Anzahl der abgetasteten Strahlen gleich wie ein voreingestellter Wert ist, und als Reaktion darauf, dass sie gleich wie der voreingestellte Wert ist, Anhalten des Abtastens.

9. Basisstation, umfassend: einen Speicher, einen Prozessor und Computerprogramme, die in dem Speicher gespeichert sind und von dem Prozessor ausgeführt werden können, wobei die Computerprogramme, wenn sie von dem Prozessor ausgeführt werden, den Prozessor veranlassen, das Strahlverfolgungsverfahren nach einem der Ansprüche 1-8 durchzuführen.

10. Computerlesbares Speichermedium, das ein Programm zum Implementieren von Informationsübertragung speichert, das, wenn es von dem Prozessor ausgeführt wird, den Prozessor veranlasst, das Strahlverfolgungsverfahren nach einem der Ansprüche 1-8 durchzuführen.

**Revendications**

1. Procédé de suivi de faisceau comprenant :

la construction (S101) d'une liste d'adjacence en fonction des corrélations initiales entre les faisceaux ;
la détermination (S102) d'un premier type de faisceaux corrélés dont la corrélation avec un faisceau optimal actuel est supérieure à un premier seuil en fonction de la liste d'adjacence ;
le balayage (S103) du faisceau optimal actuel et du premier type de faisceaux corrélés ;
le balayage circulaire (S104) des faisceaux dans la liste d'adjacence à partir du premier type de faisceaux corrélés ;
la détermination (S105) d'une corrélation entre deux des faisceaux balayés en fonction d'une qualité de signal reçue du faisceau balayé renvoyé par un récepteur, et la mise à jour de la liste d'adjacence ; et
la détermination (S106) de l'existence d'une déviation de faisceau en fonction de la liste d'adjacence mise à jour, et la re-détermination du faisceau optimal actuel ;
**caractérisé en ce que**,
le balayage circulaire (S104) des faisceaux dans la liste d'adjacence à partir du premier type de faisceaux corrélés comprend :

S1, configurant N à être 1 ;
S2, la détermination d'un $(N+1)^{\text{ième}}$ type de faisceaux corrélés dont la corrélation avec l'un quelconque des $N^{\text{ièmes}}$ types de faisceaux corrélés est supérieure à un deuxième seuil en fonction de la liste d'adjacence ;
S3, la détermination d'un faisceau préféré présentant une corrélation maximale avec le faisceau optimal actuel du $(N+1)^{\text{ième}}$ type de faisceaux corrélés ;
S4, la détermination d'un $(N+2)^{\text{ième}}$ type de faisceaux corrélés ayant une corrélation avec le faisceau préféré qui est supérieur à un troisième seuil en fonction de la liste d'adjacence ;

S5, le balayage du faisceau préféré et du (N+2)<sup>ième</sup> type de faisceaux corrélés ; et
S6, l'ajout de 2 à N, puis le retour à l'étape S2.

**2.** Procédé selon la revendication 1, comprenant en outre :

la détermination d'une position spatiale de chaque faisceau en fonction d'un angle de couverture spatial de chaque faisceau avant la construction (S101) de la liste d'adjacence en fonction des corrélations initiales entre les faisceaux ; et
la détermination des corrélations initiales entre les faisceaux en fonction de la position spatiale de chaque faisceau.

**3.** Procédé selon la revendication 1, comprenant en outre :

le balayage de tous les faisceaux avant la construction (S 101) de la liste d'adjacence en fonction des corrélations initiales entre les faisceaux ; et
la détermination des corrélations initiales entre les faisceaux en fonction de la qualité de signal reçue de chaque faisceau renvoyé.

**4.** Procédé selon la revendication 1, dans lequel la détermination (S105) d'une corrélation entre deux des faisceaux balayés en fonction de la qualité de signal reçue du faisceau balayé renvoyé par un récepteur et la mise à jour de la liste d'adjacence comprend :

la normalisation (S214) de la qualité de signal reçue du faisceau balayé renvoyé par le receveur ;
la détermination (S215) d'une corrélation entre deux des faisceaux balayés en fonction de la qualité normalisée du signal reçue ; et
la mise à jour (S216) de la liste d'adjacence en fonction de la corrélation entre deux des faisceaux balayés.

**5.** Procédé selon la revendication 4, dans lequel la mise à jour (S216) de la liste d'adjacence en fonction de la corrélation entre deux des faisceaux balayés comprend :

la substitution de la corrélation entre deux des faisceaux balayés dans la Formule 1 pour résoudre une corrélation optimisée $A_i$,

$$\min \quad \left\| A_i - A_i(k) \right\|_2^2 + \beta \left\| A_i - A_i(k-1) \right\|_2^2 + \lambda \left\| A_i \right\|_1 \qquad \text{Formule 1 ;}$$

où $A_i(k)$ dénote une corrélation entre les faisceaux corrélés d'un faisceau $i$ et du faisceau $i$ à un moment $k$, $A_i(k-1)$ dénote une valeur historique de $A_i$ à un moment $k-1$, $\|\cdot\|_2$ dénote la norme L2, $\|\cdot\|_1$ dénote la norme L1, $\beta$ et $\lambda$ sont des périodes préétablies pondérées et $\beta \geq 0$, $\lambda \geq 0$, $\left\| A_i - A_i(k) \right\|_2^2$ est une erreur quadratique moyenne postérieure, $\left\| A_i - A_i(k-1) \right\|_2^2$ est une période de perturbation minimale, et $\|A_i\|_1$ représente un terme de pénalité de faible densité ; et
la mise à jour de la liste d'adjacence en fonction du $A_i$ résolu.

**6.** Procédé selon la revendication 4, dans lequel la qualité du signal reçu comprend au moins l'un des éléments suivants : la puissance reçue du signal de référence, le rapport signal/bruit ou le rapport signal/brouillage plus bruit.

**7.** Procédé selon la revendication 1, dans lequel la détermination (S 106) de l'existence d'une déviation de faisceau en fonction de la liste d'adjacence mise à jour et la re-détermination du faisceau optimal actuel comprend :
la détermination d'un faisceau voisin ayant une corrélation maximale avec le faisceau optimal actuel en fonction de la liste d'adj acence mise à jour ; en réponse à la corrélation entre le faisceau voisin et le faisceau optimal actuel supérieure à un quatrième seuil, la détermination qu'une déviation de faisceau se produit, et la prise du faisceau voisin comme un faisceau optimal actuel re-déterminé.

**8.** Procédé selon la revendication 1, comprenant en outre :

la détermination (S212) de la conformité du nombre de faisceaux balayés à une valeur prédéfinie, et l'arrêt du balayage en cas de conformité à la valeur prédéfinie.

9. Station de base comprenant : une mémoire, un processeur et des programmes informatiques stockés dans la mémoire et exécutables par le processeur, dans laquelle les programmes informatiques, lorsqu'ils sont exécutés par le processeur, amènent ce dernier à mettre en oeuvre le procédé de suivi de faisceau de l'une des revendications 1 à 8.

10. Support de stockage lisible par ordinateur stockant un programme permettant la mise en oeuvre de la transmission d'informations qui, lorsqu'il est exécuté par le processeur, permet à ce dernier de mettre en oeuvre le procédé de suivi de faisceau selon l'une quelconque des revendications 1 à 8.

an adjacency list is constructed according to initial correlations between beams ⌐⌐ S101

↓

a first type of correlated beams having a correlation with a current optimal beam that is greater than a first threshold are determined according to the adjacency list ⌐⌐ S102

↓

the current optimal beam and the first type of correlated beams are scanned ⌐⌐ S103

↓

the beams in the adjacency list are circularly scanned from the first type of correlated beams ⌐⌐ S104

↓

a correlation between any two of the scanned beams is determined according to the received signal quality of each scanned beam fed back by a receiver and the adjacency list is updated ⌐⌐ S105

↓

whether a beam deviation occurs is determined according to the updated adjacency list and the current optimal beam is re-determined ⌐⌐ S106

Fig. 1

S1 — N is set to be 1

S2 — a (N+1)$^{th}$ type of correlated beams having a correlation with any one of the N$^{th}$ type of correlated beams that is greater than a second threshold are determined according to the adjacency list

S3 — a preferred beam having a maximum correlation with the current optimal beam of the (N+1)$^{th}$ type of correlated beams is determined

S4 — a (N+2)$^{th}$ type of correlated beams having a correlation with the preferred beam that is greater than a third threshold are determined according to the adjacency list

S5 — the preferred beam and the (N+2)$^{th}$ type of correlated beams are scanned

S6 — 2 is added to N

Fig. 2

a spatial position of each beam is determined according to a spatial coverage angle of each beam — S201

initial correlations between beams are determined according to the spatial position of each beam — S202

an adjacency list is constructed according to the initial correlations between beams — S203

a first type of correlated beams having a correlation with a current optimal beam that is greater than a first threshold are determined according to the adjacency list — S204

the current optimal beam and the first type of correlated beams are scanned — S205

S206 — N is made to be 1

S207 — a $(N+1)^{th}$ type of correlated beams having a correlation with any one of the $N^{th}$ type of correlated beams that is greater than a second threshold are determined according to the adjacency list

S208 — a preferred beam having a maximum correlation with the current optimal beam of the $(N+1)^{th}$ type of correlated beams is determined

S209 — a $(N+2)^{th}$ type of correlated beams having a correlation with the preferred beam that is greater than a third threshold are determined according to the adjacency list

NO

S210 — the preferred beam and the $(N+2)^{th}$ type of correlated beams are scanned

S211 — 2 is added to N

S212 — a judgement is made on whether the number of the scanned beams is equal to a preset value

YES

S213 — scanning is stopped

S214 — the received signal quality of each scanned beam fed back by the receiver is normalized

S215 — a correlation between any two of the scanned beams is determined according to the normalized received signal quality

S216 — the adjacency list is updated according to the correlation between any two of the scanned beams

S217 — a neighbor beam having a maximum correlation with the current optimal beam is determined according to the updated adjacency list

S218 — a judgement is made on whether the correlation between the neighbor beam and the current optimal beam is greater than a fourth threshold

S219 — a determination is made that a beam deviation occurs, and the neighbor beam is taken as a re-determined current optimal beam

a determination is made that no beam deviation occurs — 220

Fig. 3

all beams are scanned — S301

the initial correlations between beams are determined according to the received signal quality of each beam fed back — S302

an adjacency list is constructed according to the initial correlations between beams — S303

a first type of correlated beams having a correlation with a current optimal beam that is greater than a first threshold are determined according to the adjacency list — S304

the current optimal beam and the first type of correlated beams are scanned — S305

S306 — N is made to be 1

S307 — a $(N+1)^{th}$ type of correlated beams having a correlation with any one of the $N^{th}$ type of correlated beams that is greater than a second threshold are determined according to the adjacency list

S308 — a preferred beam having a maximum correlation with the current optimal beam of the $(N+1)^{th}$ type of correlated beams is determined

S309 — a $(N+2)^{th}$ type of correlated beams having a correlation with the preferred beam that is greater than a third threshold are determined according to the adjacency list

NO

S310 — the preferred beam and the $(N+2)^{th}$ type of correlated beams are scanned

S311 — 2 is added to N

S312 — a judgement is made on whether the number of the scanned beams is equal to a preset value

YES

S313 — scanning is stopped

S314 — the received signal quality of each scanned beam fed back by the receiver is normalized

S315 — a correlation between any two of the scanned beams is determined according to the normalized received signal quality

S316 — the adjacency list is updated according to the correlation between any two of the scanned beams

S317 — a neighbor beam having a maximum correlation with the current optimal beam is determined according to the updated adjacency list

S318 — a judgement is made on whether the correlation between the neighbor beam and the current optimal beam is greater than a fourth threshold

S319 — a beam deviation occurs, and the neighbor beam is taken as a re-determined current optimal beam

no beam deviation occurs — 320

Fig. 4

| Horizontal coverage Angle / Vertical coverage Angle | -90° | -75° | -60° | -45° | -30° | -15° | 0° | 15° | 30° | 45° | 60° | 75° | 90° |
|---|---|---|---|---|---|---|---|---|---|---|---|---|---|
| 0° – 15° | 1 | 2 | 3 | 4 | 5 | 6 | 7 | 8 | 9 | 10 | 11 | 12 |
| 15° – 30° | 13 | 14 | 15 | 16 | 17 | 18 | 19 | 20 | 21 | 22 | 23 | 24 |
| 30° – 45° | 25 | 26 | 27 | 28 | 29 | 30 | 31 | 32 | 33 | 34 | 35 | 36 |
| 45° – 60° | 37 | 38 | 39 | 40 | 41 | 42 | 43 | 44 | 45 | 46 | 47 | 48 |
| 60° – 75° | 49 | 50 | 51 | 52 | 53 | 54 | 55 | 56 | 57 | 58 | 59 | 60 |
| 75° – 90° | 61 | 62 | 63 | 64 | 65 | 66 | 67 | 68 | 69 | 70 | 71 | 72 |

Fig. 5

**EP 4 061 053 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018062720 A1
- CN 108075817 A